Europäisches Patentamt

European Patent Office

Office européen des brevets

(19)

(11) Veröffentlichungsnummer: **0 004 885**
**B1**

(12) **EUROPÄISCHE PATENTSCHRIFT**

(45) Veröffentlichungstag der Patentschrift: 07.04.82

(21) Anmeldenummer: 79100939.2

(22) Anmeldetag: 29.03.79

(51) Int. Cl.³: **C 04 B 43/00,**
**C 08 L 57/00, C 08 L 61/20**

(54) **Wärmedämmschicht auf Basis von Schaumstoffteilchen, Bindemitteln und Verarbeitungshilfsstoffen.**

(30) Priorität: 20.04.78 DE 2817200

(43) Veröffentlichungstag der Anmeldung:
31.10.79 Patentblatt 79/22

(45) Bekanntmachung des Hinweises auf die Patenterteilung:
07.04.82 Patentblatt 82/14

(84) Benannte Vertragsstaaten:
BE CH DE FR GB NL SE

(56) Entgegenhaltungen:
CH - A - 595 298
DE - A - 1 907 960
DE - A - 2 351 820
FR - A - 2 248 296

(73) Patentinhaber: BASF Aktiengesellschaft
Carl-Bosch-Strasse 38
D-6700 Ludwigshafen (DE)

(72) Erfinder: Teichmann, Helmut
Hammelstalstrasse 25
D-6702 Bad Duerkheim 1 (DE)
Erfinder: Roth, Hans J.
Zwerchstrasse 11
D-7520 Bruchsal (DE)

# 0 004 885

## Wärmedämmschicht auf Basis von Schaumstoffteilchen, Bindemitteln und Verarbeitungshilfsstoffen

Diese Erfindung betrifft Wärmedämmschichten auf Basis von Schaumstoffteilchen und organischen Bindemitteln, die maschinell oder von Hand hergestellt werden können und die insbesondere für die Wärmedämmung von Bauwerken dienen.

Für die Wärmedämmung, beispielsweise von Bauwerken, werden in großem Umfang Platten aus Schaumpolystyrol oder Platten aus Mineralfaservliesen eingesetzt. Das Aufbringen derartiger Wärmedämmlagen auf Außenwände von Bauwerken ist jedoch sehr aufwendig. Außerdem ist es erforderlich, die Wärmedämmlage nach außen durch Aufbringen eines Putzes oder anderen Überdeckungen zu schützen und dies erfordert beispielsweise auf der vorgefertigten Schaumpolystyrolplatte das vorherige Aufbringen eines Trägerstoffes. Man hat daher schon versucht, bei der Wärmedämmung von Mauerwerken anstelle von Schaumpolystyrol-Platten Wärmedämmputze auf das Mauerwerk aufzubringen, bei denen Schaumstoffteilchen, insbesondere Perlen aus Schaumpolystyrol unter Verwendung von mineralischen Bindemitteln, wie Zement, gebunden wurden. Dabei erhält man jedoch Wärmedämmlagen, deren Wärmeleitfähigkeit so groß ist, daß eine ausreichende Wärmedämmung erst durch Aufbringen von Schichtdicken möglich wäre, die größer sind als die Dicke von Schaumpolystyrolplatten gleicher Wärmedämmung.

Schließlich ist es auch bekannt, daß man bei der Herstellung von Überzügen unter Verwendung von Polymerisatdispersionen als organische Bindemittel geschäumte Polymerisatteilchen, z.B. Polystyrolschaumstoffteilchen, mitverwenden kann, doch sind derartige bekannte Gemische für die Herstellung eines Vollwärmeschutzes auf Mauerwerk nicht geeignet, da sie nicht in einem Arbeitsgang in der erforderlichen Schichtdicke aufgebracht werden können.

Bei der Herstellung derartiger Überzüge oder auch bei der Herstellung von Wärmedämmputzen mit mineralischen Bindemitteln werden in der Praxis Verarbeitungshilfsstoffe, beispielsweise Verdickungsmittel, wie Celluloseäther und Polyvinylalkohole und Thixotropierungsmittel, ferner amorphe Kieselsäure, Blähsilikatpulver oder Aluminiumhydroxid sowie getrocknete Polymer-Dispersionspulver und/oder Pigmente nach Bedarf zugesetzt.

Es wurde nun gefunden, daß Wärmedämmschichten auf Basis von organischen, geschlossenzelligen Schaumstoffteilchen, einem Bindemittel, das aus einer wäßrigen Copolymerisat-Dispersion und einem weiteren Kunstharz gebildet ist, und Verarbeitungshilfsstoffen besonders vorteilhafte Eigenschaften haben, wenn sie unter Verwendung eines Gemisches aus

(a) einer wäßrigen Dispersion eines Copolymerisats einer minimalen Filmbildetemperatur von höchstens 10°C,

(b) Vorkondensaten von Harnstofformaldehydharzen und/oder Vorkondensaten von Melaminformaldehydharzen,

(c) einem Härter für die Vorkondensate (b) oder Zement als Bindemittel sowie

(d) einem feinteiligen wasserunlöslichen quellend wirkenden Trocknungsmittel und

(e) einem wasserlöslichen Thixotropierungsmittel hergestellt sind.

Derartige Wärmedämmschichten, beispielsweise auf Mauerwerk, haben nach dem Trocknen einerseits eine ausreichende Festigkeit, um eine darüber angeordnete schwere Beschichtung, z.B. einen Putz, zu tragen und können andererseits in einer für den Vollwärmeschutz ausreichenden Dicke von meist 2 bis 8 cm in einem Arbeitsgang mit den für das Aufbringen üblicher Außenputze üblichen Apparaturen und/oder Werkzeugen auf Mauerwerk aufgebracht werden. Die erfindungsgemäßen Dämmschichten weisen nach dem Trocknen eine Wärmeleitfähigkeit nach DIN 52 611 und 52 612 auf, die praktisch derjenigen einer gleich dicken Platte aus Schaumpolystyrol entspricht. Sie trocknen verhältnismäßig rasch durch, so daß ein entsprechender Außenputz darauf im allgemeinen schon nach kurzer Zeit aufgebracht werden kann. Schließlich können die neuen Wärmedämmschichten so hergestellt werden, daß sie alle Bewegungen des Untergrundes und einer gegebenenfalls darauf angeordneten Beschichtung elastisch in sich aufnehmen können.

Zur Herstellung der neuen Wärmedämmschichten können die üblichen organischen geschlossenzelligen Schaumstoffteilchen eingesetzt werden, die vorzugsweise elastisch sind. Von besonderem Interesse hierfür sind Schaumstoffperlen, die insbesondere einen durchschnittlichen Durchmesser von 1 bis 4 mm haben und die vorzugsweise aus geschäumtem Polystyrol bestehen. Infrage kommen ferner Schaumpolystyrolteilchen der gennanten Abmessungen, die z.B. durch Zerreißen von Schaumpolystyrol-Abfällen erhalten wurden sowie Schaumstoffteilchen aus Polyurethanen. Die Schaumstoffteilchen können in an sich üblicher Weise flammfest bzw. flammwidrig ausgerüstet sein. Die Schüttdichte der Schaumstoffteilchen beträgt im allgemeinen 6 bis 30, vorzugsweise 9 bis 15 g/l, wobei die Schüttdichte von vorzugsweise eingesetzten Perlen aus Schaumpolystyrol meist 9 bis 15 g/l beträgt. Die hier (und in den Beispielen) angegebenen Schüttdichten werden gemessen als Gewicht in Gramm eines lose ohne Rütteln oder sonstiges Verdichten mit den Schaumstoffteilchen gefüllten Volumens von 1 l.

Bei überwiegend punktueller Bindung von Schaumstoffperlen gleichen Durchmessers, z.B. 2 mm,

2

liegt hohe Kapillarität der Dämmungsschicht vor, so daß beim Trocknen entstehender Wasserdampf und die später stets auftretende Feuchtigkeit aus dem Gebäude praktisch ungehindert durchtreten können, wodurch eine Feuchtebelastung der Schaumstoffperlen und damit die Beeinträchtigung ihrer isolierenden Wirkung vermieden wird. Es wird also erstmals ein weitgehend konstanter Wärmeleitwert erreicht und die Diffusionswiderstandszahl $\mu$ liegt nach DIN 53 429 für Wasserdampf bei etwa 4 bis 8 und beträgt somit nur etwa 10 bis 20% der einer üblichen Schaumpolystyrolplatte gleicher Wärmeleitfähigkeit. Auf der Oberseite einer derartigen Wärmedämmschicht mit verhältnismäßig großer Wasserdampfdurchlässigkeit wird, insbesondere wenn sie für die Wärmedämmung an den Außenseiten von Gebäuden, z.B. der Wände, vorgesehen ist, mit Vorteil eine Beschichtung, insbesondere ein Putz, aufgebracht, dessen Diffusionswiderstand W (Produkt aus seiner Diffusionswiderstandszahl $\mu$ für Wasserdampf nach DIN 53 429 und seiner Dicke in Meter) höchstens gleich groß ist, wie der entsprechende Diffusionswiderstand der darunter befindlichen Wärmedämmschicht. Hierdurch kann ein Feuchtestau in der Dämmschicht wermieden werden. Als Putze bzw. Beschichtung kommen z.B. wasser abweisende jedoch möglichst wasserdampfdurchlässig konfektionierte mineralische Luftporen-Putze sowie entsprechend konfektionierte Kunststoffputze in Frage. Dabei soll nach Künzel (Mitteilung 18 des Inst. f. Bauphysik, Stuttgart, April 1976) der Diffusionswiderstand W einer wasserabweisenden Außenbeschichtung im allgemeinen höchstens 2 Meter, das Produkt aus W und dem Wasseraufnahmekoeffizienten A [kg/m².h^0,5] höchstens 0,1 kg/m. $\sqrt{\text{Zeit}}$ [in Stunden] betragen.

Wählt man bei der Herstellung der neuen Wärmedämmschichten die Schaumstoffteilchen als Gemisch von Teilchen verschiedener Durchmesser im Sieblinienaufbau z.B. bei einer Perlengröße von geschäumtem Polystyrol von 1 bis 4 mm und wählt die Bindemittelmenge so, daß die verbleibenden Hohlräume zwischen den Schaumstoffteilchen praktisch vollständig damit ausgefüllt sind, so erhält man Wärmedämmschichten, deren Wasserdampfdurchchlässigkeit geringer ist, als die der im vorangehenden Absatz erwähnten Wärmedämmschichten, und die dementsprechend eine Diffusions-widerstandszahl $\mu$ von 40 bis 80 aufweisen. Solche Wärmdämmschichten kommen vor allem für die innenseitige Wärmedämmung von Gebäude-Außenwänden in Betracht, wcbei an deren nachfolgende Beschichtung hinsichtlich des Diffusionswiderstandes für Wasserdampf keine besonderen Anforderungen gestellt werden.

Das Bindemittel für die Wärmedämmschichten besteht aus mindestens 3 Komponenten. Das Gewichtsverhältnis von Bindemittel (Festoff, ohne Komponente (c), d.h. ohne Härter oder Zement) zu Schaumstoffteilchen liegt im allgemeinen im Bereich von 10:0,9 bis 1:1,5, vorzugsweise von 4:0,9 bis 2:1,5. Die dafür verwendeten wäßrigen Dispersionen von Copolymerisaten haben meist eine Konzentration von 40 bis 60 Gewichtsprozent, bezogen auf die Dispersion, an Copolymerisat, das eine minimale Filmbildetemperatur (MFT, gemessen nach DIN 53 787) von höchstens 10°C, vorzugsweise unter 1°C haben soll. Geeignet sind auch wäßrige Dispersionen solcher Copolymerisate, deren minimale Filmbildetemperatur über der angegebenen Obergrenze liegt, die jedoch Weichmacher für die Copolymerisate in solchen Mengen enthalten, daß sich aus den Dispersionen im Temperaturbereich von 0 bis 10°C ein Film bildet. Als derartige Weichmacher kommen z.B. Adipinsäure- oder Phthalsäureester sowie vorzugsweise Polymerweichmacher auf Polyester- und/oder Polyätherbasis in Frage.

Die wäßrigen Copolymerisat-Dispersionen können in üblicher Weise durch Emulsionspolymerisation bzw. Emulsionscopolymerisation aus den üblichen olefinisch ungesättigten Monomeren hergestellt sein. Als Monomere kommen z.B. monoolefinisch ungesättigte Carbonsäureester mit vorzugsweise 4 bis 12 C-Atomen, z.B. die Acryl- und/oder Methacrylsäureester des Methyl-, Äthyl-, Isopropyl-, n-Butyl-, Isobutyl- und 2-Äthylhexylalkohols, sowie die Vinylester, insbesondere der Essig- und Propionsäure, monovinylaromatische Verbindungen, wie besonders Styrol, Vinyl- und Vinylidenhalogenide, wie besonders Vinylchlorid und Vinylidenchlorid, ferner comonomere Monoolefine wie Äthylen in Frage, sowie in Mengen bis 20 Gewichtsprozent, insbesondere von 5 bis 20 Gewichtsprozent, Nitrile, $\alpha,\beta$-monoolefinisch ungesättigter Monocarbonsäuren mit 3 bis 5 C-Atomen, wie besonders Acrylnitril, sowie in Mengen von bis zu 10, insbesondere von 0,5 bis 5 Gewichtsprozent $\alpha,\beta$-monoolefinisch ungesättigte, vorzugsweise 3 bis 5 C-Atome enthaltende Mono- und Dicarbonsäuren und/oder deren Amide, N-Methylolamide und/oder N-Alkoxymethylamide, wie besonderes Acrylsäure, Methacrylsäure, Itaconsäure, Acrylamid, Methacrylamid, N-Methylolmethacrylamid, N-Methylolacrylamid, N-Methoxymethylacrylamid und N-n-Butoxymethylacrylamid sowie ferner Alkalisalze von Vinyl-Sulfonsäuren, wie vinylsulfonsaures Natrium. Derartige Copolymerisate können auch Butadien, vorzugsweise in Mengen von 40 bis 60 Gewichtsprozent, bezogen auf das Copolymerisat, einpolymerisiert enthalten, beispielsweise sind Emulsionscopolymerisate aus 30 bis 70 Gewichtsprozent Butadien und 70 bis 30 Gewichtsprozent Styrol sowie 0 bis 5 Gewichtsprozent einer $\alpha,\beta$-monoolefinisch ungesättigten 3 bis 5 C-Atome enthaltenden Mono-und/oder Dicarbonsäure, Copolymerisate aus überwiegenden Mengen 4 bis 8 C-Atome im Alkoholrest enthaltenden Alkylacrylaten, wie besonders n-Butylacrylat, Isobutylacrylat und 2-Äthylhexylacrylat, 0 bis 40 Gewichtsprozent Styrol, 0 bis 20 Gewichtsprozent Acrylnitril, 0 bis 5 Gewichtsprozent einer $\alpha,\beta$-monoolefinisch ungesättigten 3 bis 5 C-Atome enthaltenden Monocarbonsäure und 0 bis 40 Gewichtsprozent Vinylacetat und/oder Vinylpropionat oder ferner Copolymerisate aus überwiegenden Mengen eines 4 bis 8 C-Atome im Alkoholrest enthaltenden Alkylacrylats mit bis zu 40% Vinylchlorid

3

als Copolymerisate der wäßrigen Dispersionen (a) von Interesse, soweit ihre minimale Filmbildetemperatur höchstens 10°C beträgt. Die wäßrigen Dispersionen können die üblichen Emulgierhilfsmittel enthalten. Dispersionen der genannten Art sind im Handel erhältlich.

Als für die Bindemittel geeignete Vorkondensate (b) werden vorzugsweise wassermischbare Melamin-Formaldehyd- und/oder Harnstoff-Formaldehyd- sowie Harnstoff-Melamin-Formaldehyd-Kondensationsprodukte verwendet. Derartige Produkte enthalten vorzugsweise auf 1 Mol Melamin oder Harnstoff 1,4 bis 3 Mol Formaldehyd einkondensiert. Sie können mit niederen Alkoholen veräthert sein. Besonders geeignet sind beispielsweise Vorkondensate, die aus 15 bis 30 Gewichtsteilen Melamin, 80 bis 100 Gewichtsteilen Formaldehyd und bis zu 20 Gewichtsteilen Harnstoff durch Kondensation unter üblichen Bedingungen hergestellt und die mit 10 bis 20 Gewichtsteilen Methanol in üblicher Weise veräthert sind. Die Dämmassen enthalten also Harnstoff-Formaldehyd-Vorkondensate, Melamin-Formaldehyd-Vorkondensate, Melamin-Harnstoff-Formaldehyd-vorkondensate, Verätherungsprodukte derartiger Vorkondensate oder bielebige Gemische solcher gegebenen-falls verätherten Vorkondensate.

Zusätzlich zu den Bindemitteln werden Härter (c) oder Zement verwendet. Für die Härtung geeignete Härter, die für die Vernetzung der Vorkondensate (b) üblich sind, sind z.B. sauer reagierende Stoffe, wie wäßrige Phosphorsäurelösungen, Kaliumhydrogensulfat, Ammoniumchlorid und Maleinsäure. In den neuen Bindemitteln beträgt das Gewichtsverhältnis von Copolymerisat der wäßrigen Dispersion (a) zu Vorkondensaten (b) im allgemeinen 1:1 bis 10:1, vorzugsweise 1:1 bis 6:1. Das Verhältnis von Härtern (c) zu den Vorkondensaten (b) wird durch den pH-West der Bindemittelmischung beeinflußt. Ist es z.B. aus verarbeitungstechnischen Gründen erforderlich, die Bindemittelmischung alkalisch zu stabilisieren, um ein vorzeitiges Gelieren der Kondensationsharze zu verhindern, so muß mindestens so viel Härter verwendet werden, daß der pH-Wert vorzugsweise unter 6, insbesondere unter 4 liegt. Die Härtung der Vorkondensate verläuft in Gegenwart der wäßrigen Copolymerisat-Dispersionen (a) sehr langsam, soweit die Vorkondensate (b) nicht mit niederen Alkoholen, wie Methanol oder Äthanol, veräthert sind. Verätherte Vorkondensate (b) sind daher von besonderem Vorteil für die Bindemittel der neuen Wärmedämmschichten.

Zusätzlich zu den Bindemittelkomponenten (a) bis (c) enthalten die Wärmedämmassen noch als Verarbeitungshilfsstoffe in an sich üblichen Mengen feinteilige Trocknungsmittel (d), die im allgemeinen quellend wirken, z.B. amphoter reagierende Hydroxide, wie Aluminiumhydroxid, meist 4 bis 12 kg, oder amorphe, hydrophile Kieselsäure, meist 1,2 bis 20 kg, oder Blähsilikatmehle z.B. aus Perlite, meist 1,5 bis 3 kg, jeweils auf 9 bis 15 kg Polystyrolschaumperlen (jeweils je 1 m³ Schütt-Volumen. Die Trocknungsmittel (d) wirken als anorganische wasserunlösliche Thixotropierungsmittel und können hier auch als solche bezeichnet werden. Ein weiterer Bestandteil sind wasserlösliche Thixotropierungsmittel (e) wie hochviskose Methyl-, Hydroxyäthyl-, Hydroxypropyl-, Hydroxymethyl-äthyl-, Hydroxymethylpropyl-Cellulose und/oder Carboxymethylcellulose, meist 0,5 bis 1 kg auf 9 bis 15 kg Polystyrolschaumperlen (jeweils je 1 m³ Schütt-Volumen) die auch stabilisierend auf den Luftporengehalt der Wärmedämmassen wirken.

Als weitere Hilfsmittel kommen gegebenenfalls

(f) Stabilisierungs- oder Quellmittel, wie Stärkeäther oft bis 1 kg je 9 bis 15 kg Polystyrolschaumperlen (1 m³ Schüttvolumen),

(g) verzögert wirkende Porenbildner, z.B. an sich leicht mit Wasser unter Wasserstoffbildung reagierendes Metallpulver, das in an sich bekannter Weise mit einer wasserlöslichen Umhüllung versehen ist oder langsam unter Wasserstoffbildung mit Wasser reagierendes Metallpulver, die meist in Mengen von 0,1 bis 0,3 kg auf 9 bis 15 kg Polystyrolschaumperlen (1 m³ Schüttvolumen) eingesetzt werden. Durch die Porenbildung kann z.B. dem Schwinden der Wärmedämmschicht beim Trocknen entgegengewirkt werden.

(h) Flammschutzmittel, wie sie für Schaumstoffe der verwendeten Art üblich sind, in üblichen Mengen, z.B. organische Chlor- und/oder Bromverbindungen und Antimontrioxid,

(i) organische oder anorganische Fasern von 0,2 bis 1,0 mm Durchmesser und 3 bis 10 mm Länge zur Erhöhung der Eindruckfestigkeit der Dämmschicht, zur Vergrößerung der Oberflächenrauhigkeit sowie zur Begrenzung des Schwunds oft in Mengen von 5 bis 60 kg auf 9 bis 15 kg Polystyrolschaumperlen (1 m³ Schüttvolümen)

in Frage, wobei die Komponenten (f) bis (i) einzeln oder in beliebigen Kombinationen mitverwendet werden können.

Die Wärmedämmassen werden mit Vorteil unmittelbar vor ihrer Verarbeitung zu den neuen Wärmedämmschichten hergestellt, wobei man von vorgefertigten Teilgemischen ausgehen kann, in denen Härter (c) einerseits und Vorkondensate (b) andererseits in beliebiger Mischung mit den anderen Komponenten vorliegen können, so daß Härter (c) und Vorkondensate (b) erst unmittelbar vor der Verarbeitung der Wärmedämmassen zusammengegeben werden. Die fertig angesetzten Wärmedämmassen können im allgemeinen innerhalb eines Zeitraums von etwa einer Stunde verarbeitet werden. Eine geeignete lagerfähige Ausgangstrockenmischung besteht z.B. aus (A) Perlen von geschäumten Polystyrol und pulverförmigem Härter, beispielsweise pulverförmiger Maleinsäure und (B) einer dazu getrennt zu lagernden Naßkomponente aus einer Polymerisat-Dispersion (a) und Lösungen von Vorkondensaten (b), die gegebenenfalls gegen vorzeitiges Gelieren der Vorkondensate (b) stabilisiert ist (z.B. durch Einstellen des pH-Werts auf 8 bis 9). Ein anderes geeignetes lagerfähiges System besteht z.B. aus (A)' einer Trockenmischung von Perlen aus geschäumtem Polystyrol und pulverförmigen Vorkondensaten (b) und (B) einer Naßkomponente aus einer Copolymerisatdispersion (a) und einer Härterlösung (c), z.B. einer 20%igen wäßrigen Phosphorsäurelösung. Derartige zusammengehörige Trocken-und Naßmischungen können dann beispielsweise auf der Baustelle gemischt und unter Zusatz der weiteren Verarbeitungshilfsstoffe vorteilhaft mit den im Putzgewerbe üblichen Doppelkolben- und Schnecken-Putzmaschinen verarbeitet, z.B. auf Mauerwerk aufgebracht werden. Man erhält so fugenlose Wärmedämmschichten, die in relativ kurzer Zeit durchhärten und trocknen, wobei sie ohne weiteres in Schichtstärken von bis zu 8 cm und oft mehr, beispielsweise 15 cm, aufgetragen werden können.

Die neuen Wärmedämmschichten haften auf dem üblichen Untergrund für Putze, d.h. Mauerwerk aller Art, Beton und Leichtbauplatten sowie auf alten Putzen ausgezeichnet und sind geeignet, als Oberbeschichtung beliebige Putze zu tragen.

Da die Oberfläche der neuen Wärmedämmschichten verhältnismäßig rauh ist, haften darauf die üblichen Oberputze ohne zusätzliche Verwendung eines armierten Trägerstoffes ausgezeichnet. Eine weitere Vergößerung der Rauhigkeit der Oberfläche läßt sich durch Einarbeiten von Fasern, die vorzugsweise einen Durchmesser von 0,2 bis 0,3 mm und eine Länge von vorzugsweise 3 bis 8 mm haben, erreichen.

Fur Anwendungsgebiete, für die eine Dämmschicht mit erhöhter Druckfestigkeit erwünscht ist, kann den Dämmassen anstelle der Härter (c) für die Vorkondensate (b) auch ein mineralisches Bindemittel, wie besonders Zement, zugefügt werden. Neben der Druckfestigkeitserhöhung der Dämmschicht erhält man vorzugsweise mit schnellabbindenden Zementen, wie Portlandzement 550 F oder RSC-Zement (Regulated-Set-Cement)-eventuell zusätzlich in Kombination mit einem hierfür geeigneten Abbindebeschleuniger—auch eine beschleunigte Verfestigung der Dämmschicht. Bei geringeren Zementanteilen kann man manchmal die graduelle Verschlechterung des Wärmedämmvermögens wegen der gennanten Vorteile in Kauf nehmen, z.B. bei 35 bis 100 kg Zement auf 9 bis 15 kg Schaumstoffteilchen (d.h. 1 m³ Schüttvolumen) vor allem, wenn bei gleichzeitiger Verwendung eines weichen Dispersionsputzes als Beschichtung eine höhere Eindruckfestigkeit der Dämmlage erforderlich ist. Dies gilt auch, wenn Begehbarkeit der Dämmschicht erwünscht ist (z.B. Wärmedämmung von Flachdächern).

Beispiel 1

Mischung 1 (trocken)

     140 Teile schaumförmiges Polystyrol (Perlen, Durchmesser 2 mm, Schüttdichte 14 g/l)
     15 Teile Maleinsäure (Härter c),
     50 Teile amorphe, hydrophile Kieselsäure (Schüttdichte 0,17 g/l Trocknungsmittel d)
     6 Teile Hydroximethylpropylcellulose-Pulver (Viskosität einer 2%igen wäßrigen Lösung nach Brookfield=20 000 mPa.s, Schüttdichte 0,30 g/l; Thixotropierungsmittel e) und
     8 Teile Stärkeäther-Pulver (Amylotex®) Schüttdichte 0,56 g/l).

Mischung 2 (naß)

     400 Teile einer 50%igen wäßrigen Dispersion (a) eines Copolymerisates (minimale Filmbildetemperatur 0°C) aus 68 Gewichsprozent, bezogen auf das Copolymerisat, Butadien, 29 Gewichtsprozent Styrol und 3 Gewichtsprozent Methacrylamid, die in üblicher Weise durch Emulsionscopolymerisation der Monomeren unter Zusatz von 2 Gewichtsprozent eines Gemisches aus gleichen Teilen üblicher nichtionischer und anionischer Emulgatoren hergestellt ist, 58 Teile einer 55%igen wäßrigen Lösung eines mit Methanol verätherten Vorkondensates (b) aus 25 Teilen Melamin, 8 Teilen Harnstoff und 95 Teilen Formaldehyd, 200 Teile einer 70%igen wäßrigen Lösung eines weiteren Vorkondensates (b) aus 1 Mol Harnstoff und 2,2 Mol Formaldehyd und 800 Teile Wasser.

Mischung 1 und Mischung 2 werden in einem Zwangsmischer gründlich gemischt und dann mit der erhaltenen Wärmedämmasse eine Wärmedämmschicht in einer Dicke von 4 cm hergestellt. Man läßt bei Raumtemperatur vollständig austrocknen (48) Stunden) und erhält eine Dämmschicht der Dichte 45 g/l. Die Wärmeleitfähigkeit dieser Dämmschicht beträgt nach vollständiger Trocknung $\eta$=0,037 W/mK, die Diffusionswiderstandszahl (für Wasserdampf) $\mu$=8 (DIN 53 429). Die Wärmedämmasse kann unter Verwendung der im Putzgewerbe üblichen Apparate auf Mauerwerk aufgebracht werden. Dabei können Schichtdicken bis 10 cm in einem Arbeitsgang angewandt werden. Auf die Dämmschichten kann auch bei Schichtdicken von 8 bis 10 cm ein üblicher mineralischer Oberputz nach DIN 18 550 ohne weitere Vorkehrungen nach Trocknung bei Raumtemperatur (nach etwa 96 Stunden) aufgebracht werden.

Biespiel 2

Mischung 1 (trocken)

     140 Teile schaumförmiges Polystyrol (Perlen, Durchmesser 2 mm, Schüttgewicht 14 g/l)

30 Teile pulverförmiges Vorkondensat (b) aus 25 Teilen Melamin, 8 Teilen Harnstoff und 95 Teilen Formaldehyd, das mit 15 Teilen Methanol veräthert ist,

34 Teile pulverförmige amorphe, hydrophile Kieselsäure (Schüttdichte 0,17 g/l; =Trocknungsmittel d)

7 Teile Hydroxymethylpropylcellulose (pulverförmig, Firma Wolff, Walsrode, "HPMC 20 000"; Thixotropierungsmittel e)

6 Teile handelsüblicher Stärkeäther (Amylotex®).

Mischung 2 (naß)

600 Teile wäßrige 50%ige Copolymerisat-Dispersion (a), wie in Beispiel 1 angegeben, 650 Teile 20%ige wäßrige Phosphorsäure-Lösung (Härter c) und 300 Teile Wasser.

Mischung 1 und Mischung 2 werden gründlich gemischt und aus der erhaltenen Wärmedämmasse eine Dämmschicht von 4 cm Dicke hergestellt. Die Wärmedämmasse ist etwa 1 Stunde verarbeitbar. Die Dämmschicht ist nach 48 Stunden bei Raumtemperatur ausgehärtet, so daß ein mineralischer Oberputz in üblicher Weise aufgebracht werden kann. Die Wärmedämmschicht ist nach weiteren 48 Stunden vollständig ausgetrocknet und hat dann (ohne Oberputz) die Wärmeleitfähigkeit $\eta$=0,038 W/mK, die Dichte 50 g/l und die Diffusionswiderstandszahl $\mu$=10. Demgegenüber beträgt bei einer in herkömmlicher Weise hergestellten Platte aus schaumförmigem Polystyrol vom Raumgewicht 15 g/l die Wärmeleitfähigkeit $\eta$=0,038 W/mK, die Diffusions-widerstandszahl (für Wasserdampf) $\mu$=40.

Die erfindungsgemäße Wärmedämmschicht eignet sich insbesondere zur Herstellung von wärmedämmenden Außenputzen auf Mauerwerk aller Art, auf dem sie sehr gut haftet.

Biespiel 3

Wie in Beispiel 2 angegeben wird eine Wärmedämmschicht von 5 cm Dicke hergestellt, wobei jedoch die Wärmedämmasse an Stelle der 650 Teile Phosphorsäure-Lösung (Härter c), 720 Teile schnellabbindenden Zement und 600 Teile Wasser enthält. Nach 12 Stunden reicht die Festigkeit der Wärmedämmschicht für das Aufbringen eines Oberputzes aus. Die Wärmeleitfähigkeit der Dämmschicht beträgt $\eta$=0,07 W/mK, ihre Diffusionswiderstandszahl $\mu$=20.

Als Oberputz wird in einer Dicke von 1 mm ein handelsüblicher Dispersionsstreichputz (Diffusionswiderstandszahl $\mu$=319, gemessen bei Luftfeuchtigkeitsgefälle von 93 auf 50%, Basis n-Butylacrylat-Styrolcopolymerisat-Dispersion, Pigmente, Filmbildehilfsmittel, Füllstoffe usw.=®Riconal der Firma Rickert, Bocholt) aufgebracht.

Bei dem erhaltenen System ist das Produkt aus Diffusions-widerstandszahl $\mu$ und Dicke in m (=Diffusionswiderstand) der Dämmlage =0,05×20=1 m und des Oberputzes =0,30 m.

Beispiel 4
Mischung 1 (naß)

600 Teile einer 50%igen wäßrigen Dispersion (a) eines Copolymerisates aus 49 Gewichtsprozent n-Butylacrylat, 49 Gewichtsprozent Styrol und 2 Gewichtsprozent Acrylamid, die in üblicher Weise durch Emulsionspolymerisation unter Zusatz von 2 Gewichtsprozent eines Gemisches aus gleichen Teilen üblicher nichtionischer und anionischer Emulgatoren hergestellt ist, und die 5% eines Weichmachers auf Polyesterbasis (Adipinsäure-Propandiol-1,2-Polykondensat) enthält (minimale Filmbildetemperatur ohne Weichmacher=18°C, mit Weichmacher $\leqq$1°C), 100 Teile einer 70%igen wäßrigen Lösung eines Vorkondensates (b) aus 40 Teilen Harnstoff und 100 Teilen Formaldehyd, das mit 50 Teilen Methanol veräthert ist und 1200 Teile Wasser.

Mischung 2 (trocken)

150 Teile Polystyrolschaumperlen im Körnungsaufbau nach Sieblinie von 1 bis 4 mm $\theta$ (Schüttdichte 15 g/l)

15 Teile Maleinsäure (Härter c)

15 Teile Blähsilikatmehl (Schüttdichte 0,075 g/l; Trocknungsmittel d)

60 Teile amorphe, feinteilige und hydrophile Kieselsäure (Schüttdichte 0,15 g/l; Trocknungsmittel d)

6 Teile Stärkeäther (Schüttdichte 0,60 g/l und

8 Teile Carboxymethylcellulose Schüttdichte 0,53 g/l; Viskosität einer 2%igen wäßrigen Lösung nach Brookfield =30 000 mPa.s; Thixotropierungsmittel e).

Mischung 1 und 2 werden gründlich gemischt und daraus eine 4 cm dicke Wärmedämmschicht, zur innenseitigen Dämmung einer Außenwand, hergestellt. Die Wärme-Dämmschicht hat die Wärmeleitfähigkeit $\eta$=0,037 W/mK und die Diffusionswiderstandszahl (für Wasserdampf) $\mu$=38.

Beispiel 5
Mischung 1 (naß)

500 Teile einer 55%igen wäßrigen Dispersion (a) eines Copolymerisates aus 75 Gewichtsprozent

**0 004 885**

Vinylacetat und 19 Gewichtsprozent Äthylen, die durch Emulsionspolymerisation unter Zusatz von 5% Polyvinylalkohol und 1% ionogenem Emulgator hergestellt ist (MFT≤1°C), werden mit 100 Teilen einer wäßrigen Kondensationsharzlösung (b)—wie in Biespiel 4 angegeben—und 800 Teilen Wasser gemischt.

Mischung 2 (trocken)
130 Teile Polystyrolschaumperlen (2 bis 3 mm Durchmesser-Schüttdichte 13 g/l)
24 Teile Maleinsäure (Härter c)
85 Teile Aluminiumhydroxid (Schüttdichte 0,2 g/l; Trocknungsmittel d)
10 Teile Hydroxiäthylcellulose (Viskosität einer 2%igen wäßrigen Lösung nach Brookfield =15 000 mPa.s; Thixotroperungsmittel e) und
150 Teile Polyesterfasern (0,5 mm Durchmesser und 8 mm Länge, Schüttdichte 0,3 k g/l).

Die Mischungen 1 und 2 werden gründlich gemischt. Die Wärmedämmasse ist etwa 2 Stunden verarbeitbar. Aus ihr wird eine 4 cm dicke Wärmedämmschicht durch Aufbringen auf eine Gebäudeaußenwand hergestellt. Man erhält eine Wärmedämmschicht, die bevorzugt für die Aufbringung eines biegesteifen Polymerdispersions-Streichputzes geeignet ist (Diffusionswiderstandszahl $\mu$=15, Wärmeleitfähigkeit $\eta$=0,040 W/mK).

Herstellung des Oberputzes
Auf die Dämmschicht wird ein handelsüblicher mineralischer Kratzputz (Total-Edelputz der Breisgauer Baustoffwerke Koch & Co. GmbH; Diffusionswiderstandszahl $\mu$=9,6) in einer Schichtdicke von 2,5 cm aufgebracht.

Bei dem erhaltenen System aus Wärmedämmschicht und handelsüblichem mineralischem Edelkratzputz ist nun für die Beschichtung das Produkt aus Diffusionswiderstandszahl $\mu$ und der Dicke in Meter (9,6×0,025=0,24 m) kleiner als das der Wärmedämmschicht (15×0,04=0,6 m), so daß ein Wasserdampfstau praktisch nicht eintreten kann.

Beispiel 6
Mischung 1 (naß)
400 Teile einer 65%igen wäßrigen Dispersion (a) eines Copolymerisates aus 68 Gewichtsprozent, bezogen auf das Copolymerisat, 2-Äthyl-hexylacrylat, 15 Gewichtsprozent Styrol und 15 Gewichtsprozent Acrylnitril, die unter Zusatz von je 1%, bezogen auf die Monomeren, üblichen anionischen und nichtionischen Emulgator durch Emulsionspolymerisation hergestellt ist (MFT≤1°C), werden mit 60 Teilen einer 60%igen wäßrigen Lösung eines Vorkondensates (b) aus 45 Teilen Melamin und 90 Teilen Formaldehyd, das mit 200 Teilen Methanol veräthert ist, sowie mit 130 Teilen einer 70%igen wäßrigen Lösung eines weiteren Vorkondensates (b) aus 60 Teilen Harnstoff und 220 Teilen Formaldehyd sowie 800 Teilen Wasser gemischt.

Mischung 2 (trocken)
90 Teile Polystyrolschaumperlen (4 mm Durchmesser, Schüttgewicht 9 g/l)
15 Teile Maleinsäure (Härter c),
50 Teile feinteilige, amorphe Kieselsäure (Schüttdichte 0,15 g/l; Trocknungsmittel d),
10 Teile Hydroxymethylpropylcellulose (Viskosität einer 2%igen wäßrigen Lösung nach Brookfield=38 000 mPa.s; Thixotropierungsmittel),
3 Teile Aluminiumpulver (beschichtet mit Celluloseäther; Porenbildner) und
60 Teile Polypropylenfaser (0,2 mm Durchmesser, 4 mm Länge)

Nach gründlichem Mischen der Komponenten 1 und 2 erhält man Dämmassen für Wärmedämmschichten, die in getrockneter Form für Wasserdampf die Diffusionswiderstandszahl $\mu$=4 und eine Wärmeleitfähigkeit von $\eta$=0,035 W/mK haben.

**Patentansprüche**

1. Wärmedämmschicht auf Basis organischer, geschlossenzelliger Schaumstoffteilchen, einem Bindemittel, das aus einer wäßrigen Copolymerisat-Dispersion und einem weiteren Kunstharz gebildet ist, und Verarbeitungshilfsstoffen, dadurch gekennzeichnet, daß sie unter Verwendung eines Gemisches aus
(a) einer wäßrigen Dispersion eines Copolymerisats einer minimalen Filmbildetemperatur von höchstens 10°C,
(b) Vorkondensaten von Harnstoff-Formaldehydharzen und/oder Vorkondensaten von Melamin-Formaldehyd-harzen und
(c) einem Härter für die Vorkondensate (b) oder Zement
als Bindemittel sowie
(d) einem feinteiligen wasserunlöslichen quellend wirkenden Trocknungsmittel und
(e) einem wasserlöslichen Thixotropeirungsmittel hergestellt ist.

7

2. Wärmedämmschicht nach Anspruch 1, dadurch gekennzeichnet, daß ihre Oberseite mit einem Putz-versehen ist, bei dem das Produkt aus Diffusionswiderstandszahl $\mu$ für Wasserdampf und Dicke höchstens gleich groß ist, wie das entsprechende Produkt der Wärmedämmschicht.

**Revendications**

1. Couche d'isolation thermique à base de particules d'une matière organique expansée (mousse) à pores fermés, d'un liant formé d'une dispersion aqueuse d'un copolymère et d'une autre résine synthétique et d'adjuvants de transformation, caractérisée en ce qu'elle est fabriquée au départ d'un mélange formé:
   a) d'une dispersion aqueuse d'un copolymère avec une température de formation d'une pellicule minimale d'au plus 10°C;
   b) de pré-condensats de résines urée-formaldéhyde et(ou) de pré-condensats de résines mélamine-formaldéhyde;
   c) d'un agent de durcissement pour les pré-condensats b) ou le ciment
comme liant, ainsi que de:
   d) un agent déshydratant insoluble dans l'eau, provoquant un gonflement, en fines particules, et
   e) un adjuvant de thixotropie hydrosoluble.

2. Couche d'isolation thermique suivant la revendication 1, caractérisée en ce que sa face supérieure est pourvue d'un enduit, pour lequel le produit de l'indice de résistance à la diffusion de la vapeur d'eau $\mu$ per l'épaisseur est tout au plus égal au même produit de la couche d'isolation thermique.

**Claims**

1. A thermal insulating layer based on organic, closed-cell foam particles, a binder consisting of an aqueous copolymer dispersion and a further synthetic resin, and processing aids, characterised in that it is produced using a mixture of
   (a) an aqueous dispersion of a copolymer having a minimum film-forming temperature of not more than 10°C,
   (b) urea/formaldehyde resin precondensates and/or melamine/formaldehyde resin precondensates, and
   (c) a curing agent for the precondensates (b) or cement as binder, as well as
   (d) a particulate, water-insoluble drying agent having a swelling action, and
   (e) a water-soluble thixotropic-making agent.

2. A thermal insulating layer as claimed in claim 1, characterized in that its upper surface is provided with a render in which the product of the diffusion resistance coefficient $\mu$ for water vapour and the thickness is at most equal to the corresponding product of the thermal insulating layer.